# EUROPÄISCHE PATENTANMELDUNG

(11) **EP 0 722 817 A1**
(43) Veröffentlichungstag der Anmeldung: **24.07.1996**
(21) Anmeldenummer: 95120352.0
(22) Anmeldetag: 21.12.1995
(51) Int. Cl.: B29C 43/22, B29C 31/00, B29D 7/01, B29C 47/34

(54) **Verfahren zur Herstellung von spannungs- und doppelbrechungsarmen Bahnen aus thermoplastischem Kunststoff**

(30) Priorität: 11.01.1995 DE 19500631
(71) Anmelder: Röhm GmbH, D-64293 Darmstadt (DE)
(72) Erfinder: Funk, Karl, D-64347 Griesheim (DE)

(57) **Zusammenfassung**

Zur Herstellung von spannungs- und doppelbrechungsarmen Bahnen aus thermoplastischem Kunststoff wird eine Schmelze des thermoplastischen Kunststoffes, vorzugsweise Polycarbonat, aus einer Schlitzdüse (1) zu einer Schmelzebahn (2) extrudiert und in einem Walzenglättwerk (3,4,5) geglättet und gekühlt. Gemäß der Erfindung werden beide Oberflächen der Bahn in Berührung mit den Glättwalzen unter die Erweichungstemperatur gekühlt und das Innere der Schmelzebahn bis zur Ablösung von der letzten Glättwalze (5) im thermoelastischen Zustand gehalten. Die von der letzten Glättwalze ablaufende Bahn wird durch Reibung an einer Rollenbahn (6) oder einem Förderband (7), deren bzw. dessen Fördergeschwindigkeit geringer als die Umfangsgeschwindigkeit der letzten Glättwalze (5) ist, so stark gebremst, daß die in Längsrichtung bestehende Orientierungsspannung weitgehend aufgehoben wird. Die Bahn wird in ebener Lage weiterbefördert, bis sie über die gesamte Dicke unter die Erweichungstemperatur abgekühlt ist.

## Beschreibung

### Gebiet der Erfindung

Die Erfindung betrifft ein Verfahren zur Herstellung von spannungs- und doppelbrechungsarmen Bahnen aus thermoplastischem Kunststoff durch Extrusion einer Schmelze des thermoplastischen Kunststoffes aus einer Schlitzdüse zu einer Schmelzebahn und nachfolgende Glättung und Kühlung der Schmelzebahn in einem Walzenglättwerk. Eingefrorene Reckspannungen in einer Kunststoffbahn können zu Verwerfungen oder Wellungen beim Erwärmen führen. Optische Doppelbrechung ist bei Anwendungen der Kunststoffbahn für optische Zwecke, z.B. als optischer Informationsspeicher, störend. Daher besteht ein technisches Interesse an spannungs- und doppelbrechungsarmen Kunststoffplatten und -folien.

### Stand der Technik

Nach EP-A 391 193 werden einseitig matte Polycarbonat-Folien von weniger als 0,6 mm Dicke durch Extrusion und Glättung zwischen eine polierten Stahlwalze und einer geschliffenen elastischen Walze hergestellt. Nach diesem Verfahren lassen sich weder Folien von mehr als 0,6 mm Dicke noch beidseitig hochglänzende Folien in einem Arbeitsgang herstellen.

Zur Verminderung von Orientierungsspannungen und optischer Doppelbrechnung bei der Extrusion von thermoplastischen Kunststoffen zu Vollplatten oder Folien ist es aus EP-A 461 485 bekannt, die extrudierte Bahn in einem Walzenglättwerk zu glätten und an der Oberseite zu kühlen, während die Unterseite und das Innere der Bahn im thermoplastischen Zustand verbleiben, und die Bahn in der Weise weiter abzukühlen, daß die auf ihre Oberfläche einwirkenden verformenden Kräfte minimiert werden. Ein geeignetes Verfahren ist in EP-A 461 488 angegeben. Dabei wird die geglättete Bahn nach dem Austritt aus dem Walzenspalt auf einem um die Unterwalze des Glättwerks umlaufenden geglätteten Stahlband weiterbewegt und in ebener Lage abgekühlt. Wegen des Erfordernisses einer Bandanlage ist das Verfahren technisch aufwendig.

### Aufgabe und Lösung

Das Ziel der Verminderung von Orientierungsspannungen und optischer Doppelbrechnung bei der Extrusion von thermoplastischen Kunststoffen zu Vollplatten oder Folien soll durch die Erfindung auf einfachere Weise erreicht werden.

Die gestellte Aufgabe wird bei einem derartigen Verfahren nach der Extrusion einer Schmelzebahn 2 und deren Glättung und Kühlung in einem Walzenglättwerk 3, 4, 5 erfindungsgemäß in der Weise gelöst, daß beide Oberflächen der Bahn in Berührung mit den Glättwalzen unter die Erweichungstemperatur gekühlt und das Innere der Schmelzebahn bis zur Ablösung von der letzten Glättwalze im thermoelastischen Zustand gehalten wird. Die von der letzten Glättwalze ablaufende Bahn wird so stark gebremst, daß die in Längsrichtung bestehende Orientierungsspannung weitgehend aufgehoben wird. Die Bahn wird in ebener Lage weiterbefördert, bis sie über die gesamte Dicke unter die Erweichungstemperatur abgekühlt ist.

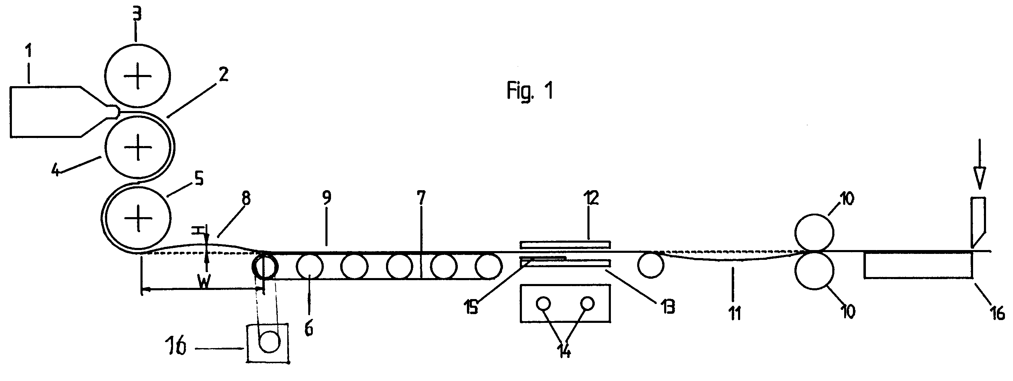

In **Figur** 1 ist eine Vorrichtung zur Durchführung des Verfahrens der Erfindung durch einen Schnitt in Extrusionsrichtung schematisch dargestellt.

### Wirkung und Vorteile der Erfindung

Beim Bremsen der von der letzten Glättwalze ablaufenden Bahn wird eine stauchende Kraft entgegen der Laufrichtung ausgeübt. Ohne die Erfindung auf eine bestimmte Theorie festzulegen, ist zu vermuten, daß die auf den Walzenoberflächen haftende Bahn geringfügig gereckt wird, da sie während der Abkühlung der Oberfläche durch die Haftung an den Walzenoberflächen an der thermischen Kontraktion gehindert wird. Anscheinend wird diese Reckung durch die stauchende Kraft aufgehoben.

Es ist überraschend, daß es mit den beanspruchten einfachen Maßnahmen gelingt, die bei der Extrusion und Glättung auftretenden Spannungen weitgehend oder vollständig aufzuheben. Zur Ausführung des Verfahrens werden einfache technische Mittel benutzt, die sich in übliche Extrusions- und Glättanlagen ohne tiefgreifenden Umbau einfügen lassen.

Orientierungsspannungen in der extrudierten Kunststoffbahn sind an der optischen Doppelbrechung leicht zu erkennen. Sie läßt sich beobachten, wenn die Bahn, vorzugsweise innerhalb der Produktionsanlage, zwischen optischen Polarisationsfiltern 12, 13 mit gekreuzt zueinander liegenden Polarisationsrichtungen hindurchgeführt und mit einer Lampe 14 von unten beleuchtet wird. Vorzugsweise wird die Bremskraft so eingestellt, daß der Gangunterschied der optischen Doppelbrechung über die Breite der Bahn bei einmaligem Durchtritt des Lichtstrahls durch die Bahn (single pass) nicht mehr als 50 nm beträgt. In diesem Fall erscheint die Bahn zwischen den Polarisationsfiltern dunkel. Bei einem Gangunterschied über 50 nm erscheint die Bahn zunehmend heller oder farbig. Eine Messung des Gangunterschieds ist in der Regel entbehrlich. Eine hinreichend genaue Abschätzung ist durch Vergleich der auftretenden Helligkeit bzw. Farbe mit derjenigen einer Referenzfolie 15 von gleicher Dicke und definierter Doppelbrechung möglich; eine solche Referenzfolie ist durch absichtlich unterschiedliche Reckung im thermoelastischen Zustand und Messung der Gangunterschiede der Wellenfronten in unterschiedlich gereckten Zonen herstellbar.

### Ausführung der Erfindung

Vorzugsweise wird die Bahn durch Reibung gebremst, beispielsweise dadurch, daß man die Bahn über eine Fläche bewegt, gegenüber der sie eine Gleitreibung hat. Die bremsende Reibungskraft hängt von der Größe und Oberflächenbeschaffenheit der reibenden Flächen und von ihrer Relativgeschwindigkeit ab. Eine niedrige Reibung zwischen der Bahn und der Fläche ist vorteilhaft; vorzugsweise beträgt der Reibungskoeffizient (Quotient aus Reibungskraft und Normalkraft) 0,5 bis 0,6.

Bei einer vorteilhaften Ausführungsform der Erfindung führt man die Bahn über eine Rollenbahn 6 oder ein auf der Rollenbahn umlaufendes endloses Förderband 7, deren bzw. dessen Fördergeschwindigkeit geringer als die Umfangsgeschwindigkeit der letzten Glättwalze 5 ist. Durch ihre Vorschubkraft wird die Bahn gleitend über die Oberfläche der Rollen oder des Förderbandes hinweggeführt. Die dabei entstehende Reibung führt zu einer entgegen der Laufrichtung wirkenden Stauchkraft. Die erforderliche Stauchkraft ist verhältnismäßig gering. Würde die Bahn über eine feststehende Fläche geführt, wäre die Relativgeschwindigkeit in der Regel zu hoch und die entstehende Reibungskraft zu groß. Durch eine verminderte Fördergeschwindigkeit des Bandes 7 im Verhältnis zur Vorschubgeschwindigkeit der Bahn, die durch die letzte Glättwalze bestimmt ist, läßt sich die erforderliche Reibungskraft genau einstellen. Eine Geschwindigkeitsdifferenz von 1 bis 3 % ist im allgemeinen ausreichend. Die Fördervorrichtung ist daher zweckmäßigerweise mit einem regelbaren Antrieb 16 ausgerüstet. Es versteht sich, daß die erforderliche Kraft mit der Breite der Bahn zunimmt.

Die an das Glättwerk anschließende Fördervorrichtung 6, 7 hat beim Verfahren der Erfindung die Aufgabe, die Bahn während der Abkühlung in ebener Lage zu halten und die erforderliche Bremskraft aufzubringen. In der Regel sind besondere Kühlvorrichtungen in diesem Bereich entbehrlich; die Bahn kühlt durch Wärmeabstrahlung und Wärmeaustausch mit der Umgebungsluft schnell genug ab. Gewünschtenfalls kann die Abkühlung mit einem kühlen Luftstrom oder anderen Kühlmitteln beschleunigt werden.

Durch die gleitende Bewegung der Bahn dürfen keine Oberflächenschäden an einer hochglänzenden Bahn verursacht werden. Fördervorrichtungen, die diese Anforderungen erfüllen, sind z.B. Rollenbahnen 6 oder Transportbänder 7, deren Oberflächen zur Vermeidung von Oberflächenschäden und zur Erzeugung eines geeigneten Reibungskoeffizienten mit einem weichen Textilmaterial belegt sein können. Geeignet sind feine Veloure, Gewebe oder Gewirke aus flauschigen Garnen oder Vliese oder Beflockungen aus gekräuselten Fasern.

Gemäß einer bevorzugten Ausführungsform wird die Bahn in einem nach oben gewölbten freitragenden Bogen 8 tangential von der letzten Glättwalze 5 abgelöst und mündet am Ende des Bogens in einen waagerechten Verlauf 9 in Höhe der Unterkante der letzten Glättwalze ein, in welchem sie gebremst wird. Die Weite W und die Höhe H des Bogens werden so bemessen, daß sich der Bogen selbst stabilisiert und die Schubkraft der Bahn über den Bogen hinweg in den ebenen Verlauf 9 hinein wirkt. Der Bogen kann umso länger und höher sein, je dicker die Bahn ist. Bei einer Bahndicke von 1 mm ist ein Bogen von 300 - 800 mm Länge und einer Höhe von 10 - 100 mm stabil. Die stauchende Kraft ist in dem Bogen wirksam und wird sowohl durch die von den abgekühlten Oberflächen ausgehende Steifigkeit als auch durch das Gewicht des gebogenen Bahnabschnittes in den waagerechten Verlauf weitergeleitet. Ist die Bogenhöhe zu groß, so steigt die Bogenhöhe weiter an und die stauchende Kraft fällt unter die erforderliche Größe ab. Ist die Bogenhöhe zu gering, so trägt sich der Bogen nicht selbst, so daß die Bahn nach unten durchsackt und unter ihrem Eigengewicht eine Zugbelastung erfährt.

Um die Bahn während der endgültigen Abkühlung unter die Erweichungstemperatur von störenden Kräften freizuhalten, ist es vorteilhaft, die abgekühlte Bahn zur weiteren Bearbeitung bzw. zur Zerteilung in Einzelabschnitte mittels einer Abzugsvorrichtung, zu befördern, die nicht unmittelbar auf den waagerechten Verlauf in der Erstarrungsphase einwirkt. Gemäß einer bevorzugten Ausführungsform geschieht dies in der Weise, daß die über die ganze Dicke unter die Erweichungstemperatur abgekühlte Bahn mittels eines angetriebenen Walzenpaares 10 abgezogen wird und daß die abgekühlte Bahn vor der Abzugsvorrichtung einen frei durchhängenden Bogen 11 durchläuft. Die abgezogene Bahn kann einer Schneidvorrichtung 16 zugeführt werden.

Gemäß dem Verfahren der Erfindung können Folien und Vollplatten aus thermoplastischen Kunststoffen mit einer Dicke von etwa 0,5 bis 10 mm, vorzugsweise 0,5 - 5 mm, insbesondere 0,7 - 2 mm hergestellt werden. Die Bahnbreite kann nach den Erfordernissen des Produkts festgelegt werden; übliche Bahnbreiten sind 0,2 bis 2 m.

Die Erfindung eignet sich in besonderem Maße für die Verarbeitung von thermoplastischen Kunststoffen, die bei der Extrusion und Glättung zur Bildung von Orientierungsspannungen und optischer Doppelbrechung neigen. Dazu gehören vor allem thermoplastische Polycarbonate, wie Bisphenol-A-polycarbonat. Ihre Erweichungstemperatur liegt in der Regel bei 145^{o}C. Die Temperatur des thermoplastischen Zustands, in dem die Schmelze aus der Düse 1 zu einer Schmelzebahn 2 extrudiert wird, liegt bei 240^{o}C. Die Oberflächentemperatur bei der Ablösung der Bahn von der letzten Glättwalze beträgt z.B. 145-150^{o}C. Wird mit einem üblichen Glättwerk mit drei Walzen 3, 4, 5 gearbeitet, so betragen deren Temperaturen vorzugsweise etwa 115, 120 und 135^{o}C. Die Umfangsgeschwindigkeit der letzten Walze 5 kann z.B. 6 - 10 m/min betragen; die Fördergeschwindigkeit der Rollenbahn 6 wird im allgemeinen 1-3 % niedriger eingestellt.

## Patentansprüche

1. Verfahren zur Herstellung von spannungs- und doppelbrechungsarmen Bahnen aus thermoplastischem Kunststoff durch Extrusion einer Schmelze des thermoplastischen Kunststoffes aus einer Schlitzdüse (1) zu einer Schmelzebahn (2), Glättung und Kühlung der Schmelzebahn in einem Walzenglättwerk (3,4,5),
dadurch gekennzeichnet,
daß beide Oberflächen der Bahn in Berührung mit den Glättwalzen unter die Erweichungstemperatur gekühlt und das Innere der Schmelzebahn bis zur Ablösung von der letzten Glättwalze (5) im thermoelastischen Zustand gehalten wird,daß die von der letzten Glättwalze ablaufende Bahn so stark gebremst wird, daß die in Längsrichtung bestehende Orientierungsspannung weitgehend aufgehoben wird, und daß die Bahn in ebener Lage weiterbefördert wird, bis sie über die gesamte Dicke unter die Erweichungstemperatur abgekühlt ist.

2. Verfahren nach Anspruch 1, dadurch gekennzeichnet, daß die Bremskraft so eingestellt wird, daß die durch Orientierungsspannung verursachte optische Doppelbrechung über die Breite der Bahn nicht mehr als 50 nm beträgt.

3. Verfahren nach Anspruch 1 oder 2, dadurch gekennzeichnet, daß die Bahn durch Reibung gebremst wird.

4. Verfahren nach Anspruch 3, dadurch gekennzeichnet, daß die Bahn durch Reibung an einer Rollenbahn (6) oder einem Förderband (7), deren bzw. dessen Fördergeschwindigkeit geringer als die Umfangsgeschwindigkeit der letzten Glättwalze (5) ist, gebremst wird.

5. Verfahren nach Anspruch 4, dadurch gekennzeichnet, daß eine Rollenbahn (6) oder ein Förderband (7) verwendet wird, deren bzw. dessen Oberfläche mit einem weichen Textilmaterial belegt ist.

6. Verfahren nach einem oder mehreren der Ansprüche 3 bis 5, dadurch gekennzeichnet, daß die Bahn an einer Auflagefläche gebremst wird, zu der sie einen Reibungskoeffizienten von 0,5 bis 0,6 hat.

7. Verfahren nach einem oder mehreren der Ansprüche 1 bis 6, dadurch gekennzeichnet, daß die Bahn in einem nach oben gewölbten freitragenden Bogen (8) tangential von der letzten Glättwalze (5) abgelöst wird und am Ende des Bogens in einen waagerechten Verlauf (9) in Höhe der Unterkante der letzten Glättwalze einmündet und in diesem Verlauf gebremst wird.

8. Verfahren nach einem oder mehreren der Ansprüche 1 bis 7, dadurch gekennzeichnet, daß die über die ganze Dicke unter die Erweichungstemperatur abgekühlte Bahn mittels eines angetriebenen Walzenpaares (10) abgezogen wird und daß die abgekühlte Bahn vor der Abzugsvorrichtung einen frei durchhängenden Bogen (11) durchläuft.

9. Verfahren nach einem oder mehreren der Ansprüche 1 bis 8, dadurch gekennzeichnet, daß als thermoplastischer Kunststoff Polycarbonat, insbesondere Bisphenol-A-Polycarbonat eingesetzt wird.

10. Verfahren nach Anspruch 9, dadurch gekennzeichnet, daß die Bahn bei Oberflächentemperaturen von etwa 150^{o}C von der letzten Glättwalze abgelöst wird.
